# EUROPEAN PATENT APPLICATION

(11) **EP 4 163 356 A1**
(43) Date of publication of application: **12.04.2023**
(21) Application number: 21818537.9
(22) Date of filing: 02.06.2021
(51) Int. Cl.: C12G 1/00

(54) **DEVICE AND PROCESS FOR THE TREATMENT OF THE DECREASE OR ELIMINATION OF REDUCTIONS AND OTHER ODOURS IN FERMENTATIVE PROCESSES IN BOTH A PREVENTIVE AND A CURATIVE MANNER**

(30) Priority: 03.06.2020 ES 202030522
(71) Applicant: Inbiolev, S.L., 31195 Aizoain (ES)
(72) Inventor: GARCÍA YOLDI, David, 31195 Aizoain (Navarra) (ES)
(86) International application number: PCT/ES2021/070395
(87) International publication number: WO 2021/245311

(57) **Abstract**

The invention consists of a process for decreasing or eliminating reductions and other odours in fermentative processes, by means of the application of products that are adsorbent for sulphurous substances, such as chitin-glucan or silicon dioxide, and phenol adsorbents; said products are disposed within porous bags (1) with a pore size smaller than that of the particles of the aforementioned products; said bags (1) are intended to be housed within a mesh (2) for the immersion thereof within the content of the fermentation vessel; a mesh (2) that may in turn be protected within a metallic container (3) featuring orifices (4) and equipped with hanging means (5), when the product is to be subjected to stirring processes during the fermentation.

## Description

### FIELD OF THE ART

The present invention relates to a process for decreasing or eliminating reductions and other odours in fermentative processes in both a preventive and curative manner.

The object of the invention is therefore to provide a process to eliminate undesired odours generated in fermentative processes, both preventively and curatively, in a non-invasive manner and with zero residues.

The invention also concerns the device specifically designed to carry out the treatment described above.

Consequently, the invention is of application in the food sector, in those processes that are susceptible to the generation of reducing agents or other substances that give the smell of onion, garlic, rotten egg, horse stable, phenols, anisoles, etc., which are undesirable or unpleasant elements in the wine, brewery, cider, etc. industries.

### BACKGROUND OF THE INVENTION

One of the major problems in the wine sector is the presence of sulphur compounds and the reduction defects they cause, such as phenolic odours. It is therefore necessary to find preventive and curative ways to avoid their presence. These odours cause quality losses and therefore loss of competitiveness in the sector.

Current treatments for the elimination of these wine defects are scarce and very aggressive for the quality and even chemical stability of the wine, which is why they are highly regulated and controlled.

Certain sulphurous substances (in particular those with thiol function) participate positively in varietal aroma in wines of certain varieties, such as Sauvignon blanc, but more generally, sulphur derivatives are characterised as causing nauseating odours and very low detection thresholds. They are known as mercaptans and sulphides. As we have seen, reduction in wines is essentially due to the formation of abnormally high content of some malodorous sulphur molecules. The main ones are SH₂, methanethiol and ethanethiol.

The primary origin of these sulphurous substances is the production of SH₂ during alcoholic fermentation.

There are two well-established paths for the origin of these substances, one enzymatic and the other chemical, such as elemental sulphur from vineyard treatments, which can lead to the formation of SH₂. The production of abnormally high concentrations of SH₂ can occur especially during the alcoholic fermentation of musts lacking in assimilable nitrogen, even in the presence of a source of easily assimilable nitrogen.

During fermentation, the yeasts must carry out fermentation in the best possible environmental conditions, avoiding resorting to metabolic pathways of stress expression. To this end, the sulphite must be kept to a minimum and must be in accordance with the pH. It is necessary to correct the acidity of the crop when it is between 4.6g/L and 5.4g/L expressed in tartaric acid, have thermally controlled fermentation, undertake a nutritional correction in NFA in the must and manage the oxygen supply. If, in spite of all this work, reduction defects appear at the end of alcoholic fermentation, it becomes imperative to rack and definitively separate the thick and thin lees, as these in principle have a reductive character and may have residual enzymatic activities (sulphite reductase), especially in the case of yeasts that have suffered nutritional deficiencies.

Two treatments are currently available for the elimination of sulphurous substances. The first commonly used curative technique is simple and logical, consisting of increasing the oxidoreductase potential with aeration by racking the wine in contact with air. However, while it is relatively easy to remove the SH₂ by racking and aeration, due to its volatility, it is very different when it comes to methanethiol, ethanethiol and especially methionol, as these compounds are much heavier and not as volatile. This technique will only be valid in the case of organoleptic reduction defects produced by SH₂, which gives off rotten egg odours, among others. If other descriptors appear, such as garlic, onion, cooked cabbage, green beans, dish cloths, etc., due to the presence of mercaptans and sulphides, this technique will not be sufficient and may even be counterproductive, as it may, by oxidation, induce the formation of sulphides and disulphides, with a very unpleasant odour and with very low perception thresholds.

In some countries, the use of silver chloride (AgCL) is permitted, but the most commonly applied reference technique for reductions is copper, and in particular copper sulphate (CuSO₄); its maximum dose is 1g/hl; 1mg/l being, by law, the upper limit of the permitted residual copper content in wine; its low affinity for sulphur substances in the medium other than hydrogen sulphide (H₂S) can cause high residual levels of copper, requiring blue fining to avoid the risks of copper casse.

Work has been carried out testing copper citrate as an alternative, having been accepted in countries such as Australia, New Zealand and some Eastern European countries, the EU ratified its approval in August 2009. Legislation sets the same maximum dose of 1g/hl but its affinity for undesirable sulphurous substances is greater than that of copper sulphate and the residual levels of copper sulphate are low, so the quantities to be applied could be reduced to avoid risks. It is usually presented in a bentonite medium which facilitates its dosage and homogenisation. No drawbacks have been observed due to the citric acid content.

For the treatment and prevention of reduction odours in musts and white and rosé wines, there is a product based on a synthetic fining agent formed from polymerisation in an alkaline medium of polyvinylpyrrolidone (PVPP) and inactivated yeasts, which is suitable against various forms and causes of reduction odours: hydrogen sulphide (H₂S), low molecular weight volatile sulphides such as diethyl disulphide, methionol, dimethyl disulphide, ethyl mercaptan and other sulphurous substances. The average dose varies between 20-40g/hl and is authorised up to a maximum of 70g/hl. It can be used in combination with the fining agent (PVPP) if the sum of both products does not exceed 80g/hl. The preparation is dissolved in 10 times its weight in must or wine, adding it to the tank to be treated so that it is perfectly homogenised in the liquid. After 7 days, the wine or must is filtered to eliminate the complexes formed.

For red wines there is another type of product, in this case based on tannins, inactivated yeasts and copper ions in aqueous solution. It treats reduction odours of distinct nature, as in the previous case for white and rosé wines. The average dose varies between 20-30cc/hl, never exceeding 40cc/hl. It does not require prior preparation and is added directly to the tank, homogenising it carefully. After 7 days the wine must be filtered to eliminate the precipitates of the complexes formed between the sulphides and the product.

It is important that the treatment is carried out at least 10 days before the final filtration and bottling.

This problem also applies to ethylphenols (4-ethylphenol, 4-ethylguatacol) from the metabolism of *Dekkera bruxellensis*, *Brettanomyces bruxellensis* or other species of these genera, which generate undesirable odours in wine.

### DESCRIPTION OF THE INVENTION

The present invention refers to a process for the decrease or elimination of compounds generated during fermentations that confer unpleasant odours such as rotten egg, onion, cheese, etc., those colloquially called reduction compounds or sulphurous substances due to their nature often composed of sulphur groups as explained above. These compounds are produced by metabolisms generated by the yeasts during fermentations in situations of metabolic stress that can bind to compounds present in the matrices to be fermented or by redox processes of the compounds present in the matrix to be fermented. These processes are dependent on the metabolic stress of the yeasts and of the matrix to be fermented, where they can converge or be aggravated depending on the compounds that the yeasts encounter in their metabolic processes.

More specifically, the innovative process consists of the use of porous bags, for example made of cellulose or other material permeable to liquids and gases or to only gases, into which the contents or active ingredients that reduce or eliminate these odours are introduced.

Depending on the volume of fermentable liquid (pre-fermentative operation) or already fermented liquid (post-fermentative operation) to be treated, x number of bags are introduced into the fermentation tanks, in other words at a specific dose.

These bags are placed inside a support, which is a mesh that allows the liquid to pass through and this mesh is housed inside a stainless steel support or container that is placed inside the fermentation tank, normally in the lower part of the tanks, although it can be placed in any location as long as it is in contact with the liquid and there is access so as to remove the mesh housed in it once the process is finished.

This stainless steel receptacle has orifices all around the contour to allow the fermentable liquid content to pass through.

The specific products or active principles also object of this invention present a high adsorption power of compounds such as phenols or sulphurous substances typical of metabolites formed in fermentative processes, and the advantage is that they are always housed inside bags, these products being insoluble in the hydroalcoholic solution, or they are introduced in bags that are only permeable to gases, so it would not be necessary for these products to be insoluble in the liquid to be treated, in all cases they will constitute zero residue from a point of view external to the bag containing them.

In this way, there is no need to carry out any subsequent filtration process to eliminate compounds for this type of treatment, nor do they entail any subsequent action such as copper oxidation or posterior copper casse, in other words, it is a product that leaves no residue in the wine or any other fermentable product, either in its aggregation with different compounds during the fermentation processes or, once fermentation is concluded, during the storage processes in any type of container, such as tanks or barrels.

Therefore, the invention not only focuses on the use of these substances or a mixture of them as a reduction treatment that leaves zero residue in their treatment, as they are insoluble, but also in the system of the invention itself as it presents a teabag format, inside a mesh and this inside a metallic container (which is made to measure) inside the fermentation tank, thus allowing for use-and-dispose formats.

Once the process is finished, the mesh is removed from the metal container and can be discarded, which translates into greater practicality, easy handling and zero residue in fermentable matrices.

As for the products or active principles contained in the bags, the use of chitin glucan and silicon dioxide has been specifically envisaged, as they are authorised by the International Organisation of Vine and Wine (OIV) in the wine sector due to their fining potential, presenting high reactivity or affinity with sulphurous substances, while any other product may also be used that is insoluble in the fermentable product and has a particle size larger than the pore size of the permeable bag containing it, or it may also be soluble in the liquid to be treated provided that the bag containing it is impermeable to the liquid and permeable to the gases in the liquid.

The use of polysaccharides and oligosaccharides as the contents of the bags has also been envisaged, which have been shown to significantly reduce the levels of undesirable phenols, such as 4-Ethylphenol and 4-Ethylguaiacol.

It could be extended to other sectors where reductions or the formation of undesired odours occur, as is the case in the production of cider, beer, etc.

These compounds have been experimentally proven to have a high capacity for correcting, decreasing or eliminating descriptors typical in reductions that originate in fermentative processes, particularly in wine.

Experimentally, to solve the problem of sulphurous substances, it has been possible to verify how this process significantly reduces the presence of these descriptors at a qualitative level, comparing it with a negative control and also with commercial products that are currently used in the treatment of reductions or positive controls that are pure active principles defined as reduction odours.

The use of these adsorbent compositions solves in a time- and cost-efficient manner what has been considered so far by the oenological industry.

As mentioned above, the product will be presented in permeable bags of the type used in herbal infusions, with a pore size smaller than the compounds on the inside to retain these adsorbent compounds that trap sulphurous substances, or in bags permeable only to gases.

As is evident, the dosage will depend on the volume to be treated.

These bags are enclosed in a mesh with capacity to hold the units required for the treatments.

This mesh will also be introduced into a stainless steel container, with orifices, which is easy to handle when removing the mesh once the process has been completed.

This container will go next to the lower lid of the tank, yet can be placed in any other physical position inside the tank so long as it is in contact with the liquid to be treated.

On the lower lid of the tank or lower opening, on the inside, a kind of welded ring will be made to which the container will be attached by means of a hook.

Therefore, the container will be provided with a hook by means of which it will be able to rest on the ring provided inside the lower lid.

As mentioned above, the process can be carried out preventively during the fermentation process or curatively after said process.

In tanks with wine already made (which are always kept completely full), the mesh with the bags can be left at the bottom of the tank, since it will be clean of sediment, or it can be hung anywhere inside the tank, for example from the top lid, since tanks with wine already made are always completely full to prevent oxidation, having been provided with a ring or similar structure in the place where it is to be hung.

However, when the tank to be treated contains must in the fermentation phase, the tank will not be full, so the mesh with the bags is placed at the bottom. In addition, and due to the agitation to which the liquid is subjected and the amount of material it contains, both in suspension and deposited at the bottom, the mesh with the bags must be protected inside a perforated container or metal structure, to preserve it and ensure greater efficiency and durability.

This metallic structure is placed inside the tank, preferably next to the lower hatch, and can be hung inside this hatch which will have been fitted with the corresponding ring or similar element that makes this fastening possible.

Consequently, this last element of the device is not strictly necessary, depending on the type of product that is being treated, for example, once the fermentative product is finished and cleared of mud and lees, only the mesh with the bags can be hung from the upper lid of the tank, but if the treatment is preventive, while the fermentation is still in progress, the mesh with the bags will always be placed inside the metal container.

The present invention is applicable for the decrease or elimination of reductions in the fermentative processes of alcoholic beverages such as those that take place in the production of wine, being equally extensible to other sectors where yeast metabolisms come into play, as in the case of beer or cider.

### DESCRIPTION OF THE DRAWINGS

In order to complement the description that follows below and with the aim of helping towards a better understanding of the characteristics of the invention, in accordance with a preferential example of a practical realisation of the same, a set of drawings is attached as an integral part of this description, where the following is represented for illustrative and nonlimiting purposes:

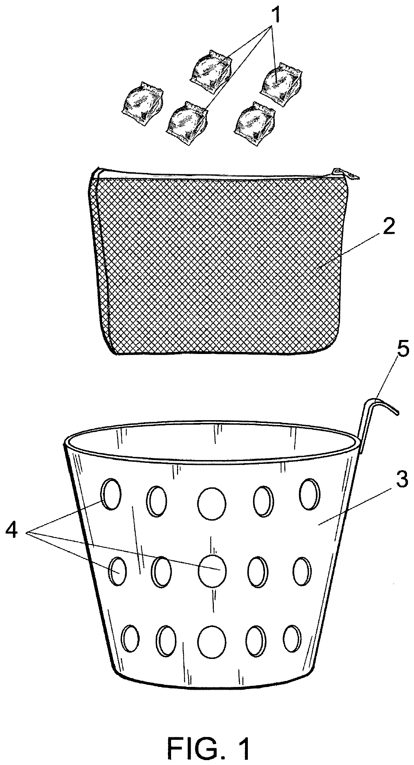

Figure 1.- Shows an exploded view of the different elements involved in a device for the treatment of the decrease or elimination of reductions in fermentative processes in both a preventive and curative manner carried out in accordance with the object of the present invention.
Figures 2, 3, 4 and 5.- Show respectively, different graphs of tests in which different sulphurous substances were tested with 100, 75, 50 and 25 microlitres of each dilution with different adsorbent substances at 40, 30, 20, 10, 5 and 3g/hl, the 0 values being those where no incidence is found and the 1 values being those where significant relevance is found in the adsorption of the sulphurous substances.
Figure 6.- Shows, finally, a graph of the sensory analysis for different samples of product mixtures tested to carry out the process of the invention.

### PREFERRED EMBODIMENT OF THE INVENTION

In view of the figures shown, it can be seen that the device for the implementation of the process of the invention is made up of a series of porous bags (1), for example of cellulose or other impermeable food grade materials, with a pore size smaller than the product disposed within, specifically an adsorbent composition for removing sulphurous substances, cellulose bags whose number or total dose used will be of the order of 22.5g/hl and which are inserted in a mesh (2), which may be placed directly in the tank of the product to be fermented, either hanging from its upper lid or placed on its bottom, when the product to be fermented is not intended to be subjected to agitation processes during fermentation, so that in the latter case, and in order to protect the integrity of the whole, the mesh shall be placed in a metal container (3) with orifices (4) and provided with a means of attachment (5), either to existing elements of the tank or to elements specifically applied to the inside of the tank, for example by means of an internal attachment ring or similar element, depending on the fill volume of the tank, so that the assemblage is always immersed.

The porous bags (1) may be impermeable to liquids provided that they are permeable to gases.

According to the essence of the invention, the product contained in the porous cellulose bags (1) is a mixture of chitin glucan and silicon dioxide, due to their adsorbent potential, their solubility and their ability to form flocs; any other product having a similar effect being able to be used to treat the reductions.

Initially, other components with similar characteristics were tested, such as polyvinylpolypyrrolidone and cellulosamicrocrystalline, but they were finally discarded because of less effective results.

However, as a first test, the suitability of the bag for these adsorbent materials was tested in a hydroalcoholic medium with acidic pH. For this purpose, an aqueous solution containing 16% ethanol and 2.8pH was proposed. An adsorbent composition was placed in a heat-sealable cellulose bag and placed in the acidic pH hydroalcoholic solution for a period of 5 days. After this period of time the condition of the bag was checked.

In none of the cases was any breakage of the bag observed.

The next step was to determine maximum doses and their influence on the sensory matrix of a wine. For this purpose, a scaling in increasing concentration of each of the adsorbent substances was carried out and it was determined that 40g/hl was an adequate dose both for its organoleptic impact and its suitability for commercialisation.

The next phase of the trial was to study what dilutions of the sulphurous substances were necessary to achieve the highest possible naturalness.

A concentration of 2, 1, 0.5 and 0.25ml/l of each sulphurous substance was introduced into 50ml of wine. Due to its odour intensity, 100, 75, 50, 25 and 10 microlitres were taken from the 0.25ml/l solution and also added to 50ml of wine. From the sensory study of these dilutions, it was found that the highest dilution did not reach such a threshold as to discriminate the effect of each adsorbent substance, so the highest dilution was discarded for the study.

Once the integrity of the cellulose bag, the maximum applicable concentration of each adsorbent substance and the necessary dilutions of the sulphurous substances to be treated were clear, the test was started by treating diethyl sulphide, dimethyl disulphide and ethyl thioacetate with polyvinylpolypyrrolidone, silicon dioxide, cellulose microcrystalline and chitin glucan.

In this test matrix, each sulphurous substance was tested with 100, 75, 50 and 25 microlitres of each dilution with each adsorbent substance at 40, 30, 20, 10, 5 and 3g/hl and it was determined which concentrations were significant in the adsorption of sulphurous substances by tasting.

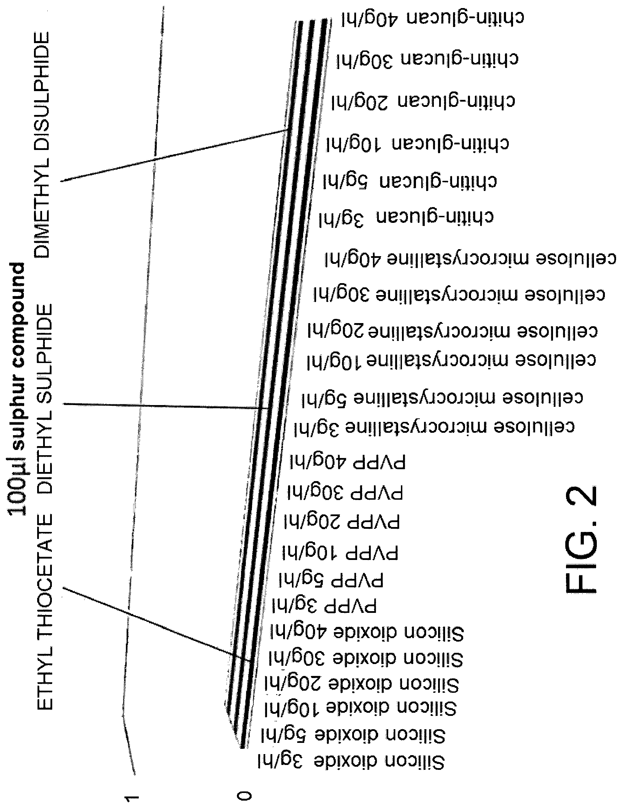

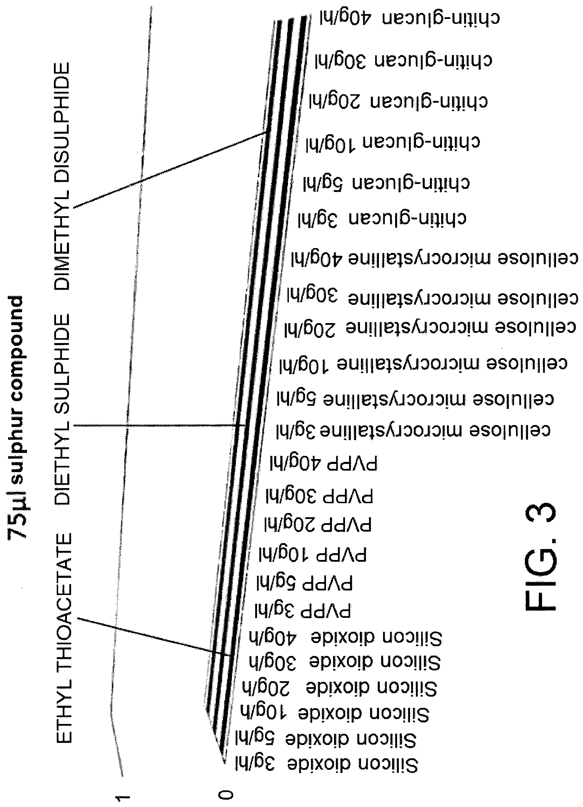

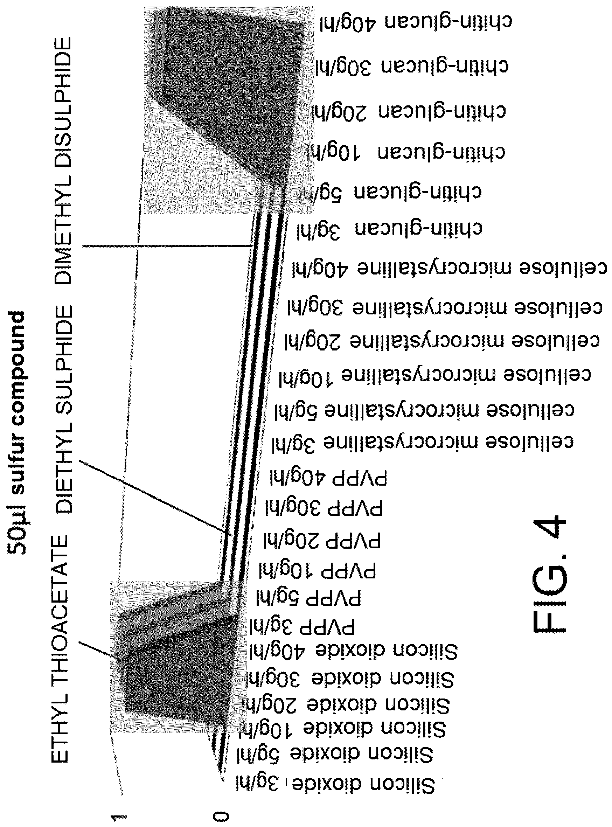

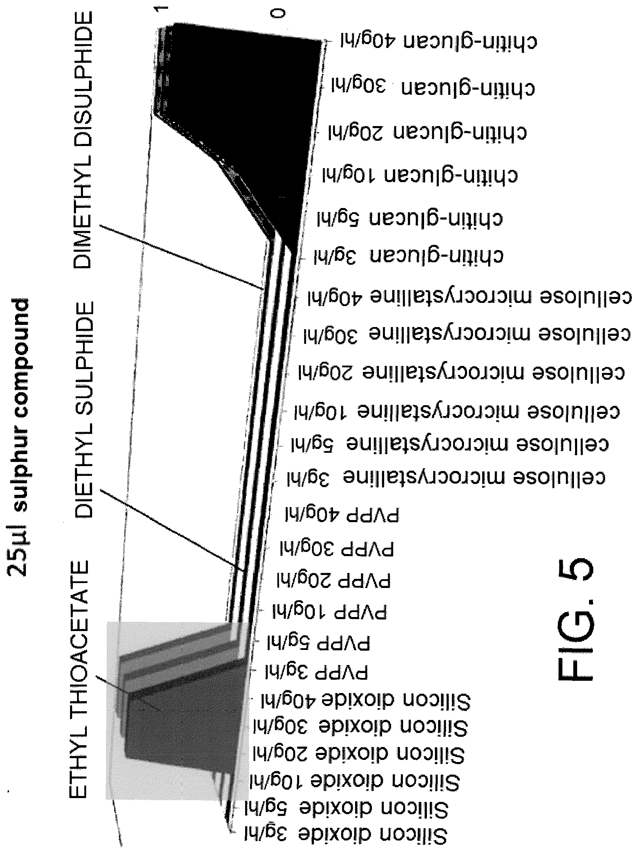

The graphs in figures 2 to 5 show these significances, with 0 values being those where no effect is found and 1 values being those where significant relevance in the adsorption of sulphurous substances is found.

From this test it was determined that the adsorbent substances silicon dioxide and chitin glucan are effective in the reduction of sulphurous substances. The application doses are between 10g/hl and 40g/hl. However, there was no significant difference between 40g/hl and 30g/hl and 20g/hl. Therefore, the maximum effective application concentration is set at 20g/hl.

Knowing this, a semi-industrial test is proposed, where, in reduced wine harvests and with the critical collaboration of another technical team, the behaviour of these adsorbent substances, chitin glucan and silicon dioxide, is studied at different concentrations (max. 20g/hl) according to the following matrix.

| | | | | | |
|---|---|---|---|---|---|
| **Sample** | **product 1** | **g/hl** | + | **product 2** | **g/hl** |
| Sample 1 | chitin glucan | 20 | | silicon dioxide | 10,00 |
| Sample 2 | chitin glucan | 15 | | silicon dioxide | 7,50 |
| Sample 3 | chitin glucan | 10 | | silicon dioxide | 5,00 |
| Sample 4 | chitin glucan | 5 | | silicon dioxide | 2,50 |
| Sample 5 | silicon dioxide | 20 | | chitin glucan | 10,00 |
| **Sample 6** | **silicon dioxide** | **15** | | **chitin glucan** | **7,50** |
| Sample 7 | silicon dioxide | 10 | | chitin glucan | 5,00 |
| Sample 8 | silicon dioxide | 5 | | chitin glucan | 2,50 |

From these tests, it was concluded that sample 6 was the cleanest and where the sensory matrix was preserved in a more natural way, compared to the negative control and two positive commercial controls.

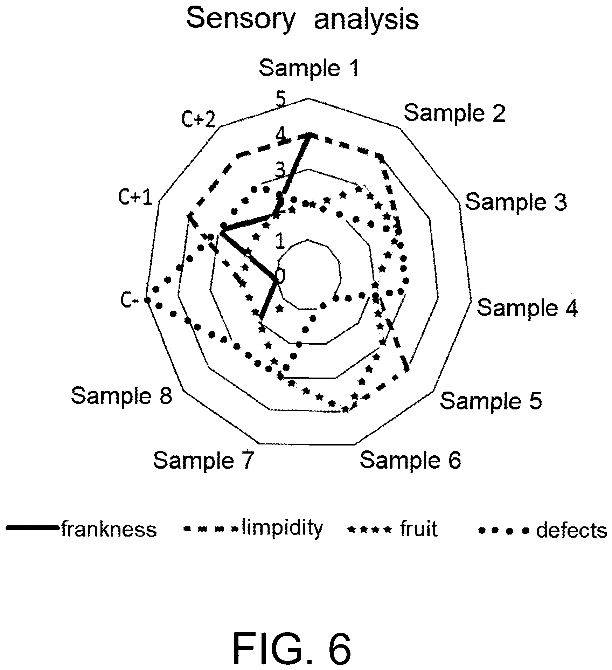

Figure 6 shows the sensory analysis of the different samples, corroborating what has been described above.

In other tests carried out, it has been shown that the use of polysaccharides and/or oligosaccharides as contents of the bags significantly reduces the levels of undesirable phenols in the wine, such as 4-ethylphenol and 4-ethylguaiacol, with the corresponding decrease in their organoleptic detection to below the recommended detection thresholds: 4-EF, 440µg/l and 4-EF+4-EG, 620pg/l. (Chattonet-Vila-Dubordie, American Journal of Enology and Viticulture 1997), as shown in the following table of results for a red wine sample, referring to a control sample and 4 replicates:

| | Sample Control | Sample 1 | Sample 2 | Sample 3 | Sample 4 |
|---|---|---|---|---|---|
| 4-Ethylphenol (µg/l) | 428 ± 5 | 35 ± 5 | 40 ± 5 | 28 ± 2 | 27 ± 2 |
| 4-Ethylguaiacol (µg/l) | 126 ± 4 | 18 ± 1 | 15 ± 1 | 13 ± 1 | 14 ± 1 |

## Claims

1. Device for the treatment of the decrease or elimination of reductions and other odours in fermentative processes in both a preventive and curative manner, **characterised in that** it is made up of a series of porous bags (1), permeable to gases and optionally to liquids, with a pore size smaller than the particles of the product contained inside, an adsorbent composition for removing reductions and/or odours, this product being insoluble in the liquid to be treated when the porous bags (1) are permeable to liquids, the porous bags (1) being housed in a mesh (2), immersible in the content of the fermentation tank.

2. Device for the treatment of the decrease or elimination of reductions and other odours in fermentative processes in both a preventive and curative manner, according to claim 1, **characterised by** the fact that the product contained in the porous bags (1) is an adsorbent composition for removing sulphurous substances.

3. Device for the treatment of the decrease or elimination of reductions and other odours in fermentative processes in both a preventive and curative manner, according to claim 1, **characterised by** the fact that the product contained in the porous bags (1) is an adsorbent composition for removing phenols.

4. Device for the treatment of the decrease or elimination of reductions and other odours in fermentative processes in both a preventive and curative manner, according to claim 1, **characterised in that** when the product to be fermented is subjected to stirring processes, the mesh (2) is placed inside a metal container (3), provided with orifices (4), and equipped with hanging means (5).

5. Device for the treatment of the decrease or elimination of reductions and other odours in fermentative processes in both a preventive and curative manner, according to claim 1, **characterised in that** the porous bags (1) are made of cellulose or other impermeable food grade materials.

6. Procedure for the treatment of the decrease or elimination of reductions and other odours in fermentative processes in both a preventive and curative manner, **characterised in that** it consists of the application of an adsorbent composition for removing sulphurous substances, specifically chitin glucan and/or silicon dioxide, prior or subsequent to the fermentation process of a product, as elements for diminishing or eliminating the reductions caused by the sulphurous substances in said fermentation process.

7. Procedure for the treatment of the decrease or elimination of reductions and other odours in fermentative processes in both a preventive and curative manner, according to claim 6, **characterised in that** the chitin glucan and/or silicon dioxide is applied in a proportion of around 22.5g/hl of the product to be treated.

8. Procedure for the treatment of the decrease or elimination of reductions and other odours in fermentative processes in both a preventive and curative manner, according to claims 6 and 7, **characterised in that** the application of a mixture of 15 grams of silicon dioxide and 7.50 grams of chitin glucan per hectolitre of product to be treated.

9. Procedure for the treatment of the decrease or elimination of reductions and other odours in fermentative processes in both a preventive and curative manner, **characterised in that** it consists of the application of an adsorbent composition for removing phenols, specifically polysaccharides and/or oligosaccharides.
